# EUROPÄISCHE PATENTSCHRIFT

(11) **EP 4 120 521 B1**
(45) Veröffentlichungstag und Bekanntmachung des Hinweises auf die Patenterteilung: **03.12.2025**
(21) Anmeldenummer: 22178557.9
(22) Anmeldetag: 13.06.2022
(51) Int. Cl.: H02K 7/18, F16C 39/02, H02K 7/116, H02K 7/08, F16H 57/023, F16H 57/021, F03D 15/00, F03D 80/70, F16C 35/073, F16C 35/077, H02K 7/00, F16H 57/02

(54) **ROTATORISCHE ENTKOPPLUNG ZUR MONTAGE UND DEMONTAGE EINES GETRIEBEINTEGRIERT GELAGERTEN GENERATORROTORS**
ROTARY DECOUPLING FOR MOUNTING AND DEMOUNTING A GENERATOR ROTOR MOUNTED ON A GEARBOX
DÉCOUPLAGE ROTATIF DESTINÉ AU MONTAGE ET AU DÉMONTAGE D'UN ROTOR DE GÉNÉRATEUR MONTÉ DE MANIÈRE À INTÉGRER L'ENGRENAGE

(30) Priorität: 14.07.2021 DE 102021207462
(43) Veröffentlichungstag der Anmeldung: 18.01.2023
(73) Patentinhaber: ZF Friedrichshafen AG, 88046 Friedrichshafen (DE)
(72) Erfinder: De Laet, Wim, 2000 Antwerpen (BE); Maes, Andy, 9112 Sinaai (BE); Sperlich, Ralf, 58452 Witten (DE)

(56) Entgegenhaltungen:
- DE-A1- 10 311 917
- US-A1- 2014 125 064
- US-A1- 2016 091 029

## Beschreibung

Die Erfindung betrifft eine Anordnung nach dem Oberbegriff von Anspruch 1, ein Verfahren nach Anspruch 11 und ein Verfahren nach Anspruch 13.

Aus dem Stand der Technik sind Windkraftanlagen bekannt, bei denen das Getriebe und der Generator baulich integriert sind. Eine solche Windkraftanlage offenbart etwa EP 2 385 247 B1. Windkraftanlagen mit baulicher Integration von Getriebe und Generator zeichnen sich dadurch aus, dass ein Generatorrotor sich auf eine Ausgangswelle des Getriebes stützt und sich mit der Ausgangswelle des Getriebes ein oder mehrere gemeinsame Lager teilen.

Aus DE 103 11 917 A1 und US 2016/091029 A1 sind Rutschkupplungen bekannt.

Aus US 2014/125064 A1 ist eine Anordnung zur Lagerung von ring- oder scheibenförmigen Komponenten eines elektrischen Generators in einer Windkraftanlage bekannt.

Um bei einer Windkraftanlage mit baulicher Integration von Getriebe und Generator im Wartungsfall das Getriebe zugänglich zu machen, muss der Generator von der Ausgangswelle entkoppelt werden. Dazu werden der Generatorrotor und ein Windrotor gehäusefest fixiert. Um entsprechende Fixiermittel anbringen zu können, müssen der Generatorrotor und der Windrotor jeweils ein eine definierte Winkellage gebracht werden.

Der Erfindung liegt die Aufgabe zugrunde, die Wartung des Antriebsstrangs einer Windkraftanlage zu vereinfachen. Diese Aufgabe wird gelöst durch eine Anordnung nach Anspruch 1, ein Verfahren nach Anspruch 11 und ein Verfahren nach Anspruch 13. Bevorzugte Weiterbildungen sind in den Unteransprüchen enthalten und ergeben sich aus nachfolgender Beschreibung.

Die erfindungsgemäße Anordnung umfasst ein Getriebe und einen Generator. Insbesondere kann die Anordnung Teil des Antriebsstrangs einer Windkraftanlage sein. In dem Fall ist ein Windrotor, das heißt ein im Wind stehender und vom Wind angetriebener Rotor, drehfest mit einer Eingangswelle des Getriebes verbunden.

Ein Generatorrotor, das heißt ein Rotor des Generators, ist drehfest mit einer Ausgangswelle des Getriebes verbunden oder verbindbar. Dies impliziert, dass sowohl die Ausgangswelle als auch der Generatorrotor drehbar gelagert sind. Durch die drehfeste Verbindung des Generatorrotors und der Ausgangswelle ist aber keine Verdrehung des Generatorrotors und der Ausgangswelle relativ zueinander möglich. An der Ausgangswelle anliegende mechanische Leistung wird somit auf den Generatorrotor übertragen und von dem Generator in elektrische Leistung umgewandelt.

Erfindungsgemäß weist die Anordnung ein Montagelager, das heißt ein Lager, das der Montage der Anordnung und/oder des obengenannten Antriebsstrangs dient, auf. Mit dem Montagelager ist der Generatorrotor in der Ausgangswelle gelagert. Dies bedeutet, dass der Generatorrotor mittels des Montagelagers drehbar in der Ausgangswelle gelagert ist, wenn der Generatorrotor nicht drehfest mit der Ausgangswelle verbunden ist.

Das Montagelager weist einen ersten Laufring und einen zweiten Laufring auf. Der erste Laufring und der zweite Laufring korrespondieren miteinander. Dies bedeutet, dass der erste Laufring und der zweite Laufring relativ zueinander verdrehbar sind und sich gegeneinander abstützen. Der erste Laufring und der zweite Laufring bilden jeweils mindestens eine Lauffläche aus. Zwischen der Lauffläche des ersten Laufrings und der Lauffläche des zweiten Laufrings verläuft ein Lagerspalt. Handelt es sich um ein Wälzlager, befinden in dem Lagerspalt Wälzkörper, die an der Lauffläche des ersten Laufrings und der Lauffläche des zweiten Laufrings abrollen. Bei einem Gleitlager ist der Lagerspalt mit Schmierstoff und/oder Luft gefüllt. Die Laufflächen des ersten Laufrings und des zweiten Laufrings stützen sich über die Wälzkörper, über den Schmierstoff oder direkt gegeneinander ab.

Der erste Laufring ist mit der Ausgangswelle, der zweite Laufring mit dem Rotor gefügt. Der erste Laufring und die Ausgangswelle können dabei als separate Stücke ausgeführt oder einstückig miteinander verbunden sein. Entsprechend können der zweite Laufring und der Rotor als separate Stücke ausgeführt oder einstückig miteinander verbunden sein.

Durch die erfindungsgemäße Lagerung des Generatorrotors in der Ausgangswelle lässt sich der Generatorrotor im Wartungsfall relativ zu der Ausgangswelle verdrehen, um den Generatorrotor in einer Wartungsposition, das heißt in einer bestimmten Drehwinkelstellung fixieren zu können. Die drehfeste Verbindung des Generatorrotors mit der Ausgangswelle muss dazu gelöst sein.

Im Betrieb ist der Generatorrotor drehfest mit der Ausgangswelle verbunden. Um eine in Betrieb genommene Windkraftanlage mit der erfindungsgemäßen Anordnung warten zu können, ist der Generatorrotor in einer bevorzugten Weiterbildung lösbar mit der Ausgangswelle verbunden. Die drehfeste Verbindung des Generatorrotors mit der Ausgangswelle ist also lösbar weitergebildet. Im Wartungsfall lässt sich dann der Generatorrotor von der Ausgangswelle lösen und mittels des erfindungsgemäßen Montagelagers relativ zu der Ausgangswelle verdrehen, um ihn in die Wartungsposition zu bringen.

Bevorzugt ist die Ausgangswelle mit einem ersten Schraubflansch weitergebildet. Der Generatorrotor weist weiterbildungsgemäß einen zweiten Schraubflansch auf. Der erste Schraubflansch und der zweite Schraubflansch sind miteinander verschraubbar. Dadurch entsteht die oben beschriebene drehfeste Verbindung zwischen dem Generatorrotor und der Ausgangswelle. Durch die Schraubflansche ist diese Verbindung auf einfache Weise lösbar.

Um den Generatorrotor im Wartungsfall frei gegenüber der Ausgangswelle verdrehen zu können, ist dieser in einer bevorzugten Weiterbildung axial verschiebbar in der Ausgangswelle gelagert. Insbesondere kann der Generatorrotor axial verschiebbar sein, wenn die drehfeste Verbindung zwischen dem Generatorrotor und der Ausgangswelle gelöst ist. Mit axialer Verschiebbarkeit wird eine Verschiebbarkeit parallel zu einer Drehachse des Generatorrotors, der Ausgangswelle und des Montagelagers bezeichnet.

Die axial verschiebbare Lagerung des Generatorrotors in der Ausgangswelle lässt sich auf verschiedene Weise realisieren. So ist es etwa möglich, das Montagelager axial verschiebbar weiterzubilden. In dem Fall sind mindestens zwei zueinander korrespondierende Laufringe des Montagelagers axial gegeneinander verschiebbar.

Bei den korrespondierenden Laufringen handelt es sich etwa um einen inneren Laufring und einen äußeren Laufring des Montagelagers. Der innere Laufring ist mindestens teilweise radial innerhalb des äußeren Laufrings angeordnet. Dies impliziert, dass der äußere Laufring mindestens teilweise radial außerhalb des inneren Laufrings angeordnet ist. Mindestens eine radial, das heißt orthogonal zu der oben genannten Drehachse verlaufende Ebene schneidet sowohl den inneren Laufring als auch den äußeren Laufring.

Auch lässt sich die axial verschiebbare Lagerung des Generatorrotors in der Ausgangswelle mittels einer Passverzahnung realisieren. Über diese ist mindestens ein Laufring des Montagelagers mit dem Generatorrotor oder der Ausgangswelle verbunden. Die Passverzahnung besteht aus zwei Einzelverzahnungen, die drehfest ineinandergreifen. In axialer Richtung sind die Verzahnungen relativ zueinander verschiebbar. Eine der Verzahnungen ist vorliegend ein- oder mehrstückig mit dem mindestens einen Laufring des Montagelagers gefügt. Die andere Verzahnung ist ein- oder mehrstückig mit dem Generatorrotor oder der Ausgangswelle gefügt.

Der Generator und das Getriebe sind bevorzugt mindestens teilweise integriert weitergebildet. Dies bedeutet, dass die Ausgangswelle und/oder ein Lager der Ausgangswelle die Gewichtskraft des Generatorrotors mindestens teilweise abstützt. Bei dem Lager der Ausgangswelle handelt es sich um ein Lager, mit dem die Ausgangswelle in einem Gehäuse des Getriebes oder in einem gehäusefest fixierten Bauteil gelagert ist.

Vorzugsweise sind das Getriebe und der Generator vollständig integriert. In dem Fall weist der Generatorrotor kein eigenes Lager auf, sodass die Ausgangswelle und/oder das mindestens eine Lager der Ausgangswelle die Gewichtskraft des Generatorrotors vollständig abstützen.

Bevorzugt ist der Generatorrotor mit einer Montagesicherung weitergebildet. Dies ist ein Mittel, mit dem der Generatorrotor gehäusefest fixierbar ist. Der Generatorrotor ist also mittels der Montagesicherung in einem Gehäuse des Getriebes oder des Generators oder in einem gehäusefesten Bauteil, das heißt in einem Bauteil, das in dem Gehäuse des Getriebes oder des Generators starr fixiert ist, fixierbar. Die Montagesicherung kommt zur Anwendung, wenn das Getriebe und der Generator teilweise oder vollständig integriert sind. Da die Gewichtskraft des Generatorrotors dann mindestens teilweise von der Ausgangswelle und/oder dem mindestens einen Lager der Ausgangswelle abgestützt wird, ist die Montagesicherung erforderlich, um die Ausgangswelle und/oder das mindestens eine Lager der Ausgangswelle demontieren zu können.

In einer bevorzugten Weiterbildung umfasst die Anordnung den eingangs erwähnten Windrotor.

Bevorzugt ist die Anordnung darüber hinaus mit einer Montagesicherung für den Windrotor weitergebildet. Diese dient dazu, den Windrotor gehäusefest zu fixieren. Der Windrotor ist also mittels der Montagesicherung in dem Gehäuse des Getriebes oder in einem gehäusefesten Bauteil, das starr in dem Gehäuse des Getriebes fixiert ist, fixierbar.

Ein erfindungsgemäßes Verfahren dient der Inbetriebsetzung einer mit einer Montagesicherung für den Generatorrotor weitergebildeten Anordnung. Zunächst ist der Generatorrotor mittels der Montagesicherung gehäusefest fixiert. Mittels einer weiteren Montagesicherung kann darüber hinaus auch der Windrotor gehäusefest fixiert sein.

Zur Inbetriebnahme wird die Montagesicherung des Generatorrotors gelöst. Das Montagelager erlaubt es, den Generatorrotor dann relativ zu der Ausgangswelle zu drehen. Durch Verdrehung relativ zu der Ausgangswelle wird der Generatorrotor in eine Drehwinkellage gebracht, in der er sich drehfest mit der Ausgangswelle verbinden lässt. Sind etwa die Ausgangswelle und der Generatorrotor mit Schraubflanschen weitergebildet, wird der Generatorrotor so verdreht, dass die Schraublöcher der beiden Schraubflansche zueinander fluchten und die Schrauben eingesteckt werden können.

Falls vorhanden, wird auch die Montagesicherung des Windrotors wieder gelöst. Dies geschieht bevorzugt, nachdem der Generatorrotor drehfest mit der Ausgangswelle verbunden wurde.

Da das Montagelager im Betrieb nicht gebraucht wird und funktionslos ist, wird es in einer bevorzugten Weiterbildung des Verfahrens ausgebaut. Das Montagelager wird also weiterbildungsgemäß aus der Anordnung entfernt. Dies geschieht bevorzugt, nachdem der Generatorrotor drehfest mit der Ausgangswelle verbunden wurde.

Ein weiteres erfindungsgemäßes Verfahren dient der Wartung der mit der Montagesicherung für den Generator weitergebildeten Anordnung. Das Verfahren sieht vor, die Anordnung durch Lösen der drehfesten Verbindung des Generatorrotors mit der Ausgangswelle außer Betrieb zu setzen und den Generatorrotor relativ zu der Ausgangswelle in eine Wartungsposition zu verdrehen. Befindet sich der Generatorrotor in der Wartungsposition, wird er mittels der Montagesicherung gehäusefest fixiert. Dies geschieht bevorzugt, bevor die drehfeste Verbindung des Generatorrotors mit der Ausgangswelle gelöst wird.

Eine bevorzugte Weiterbildung des Verfahrens sieht vor, dass das Montagelager in die Anordnung eingebaut wird - bevorzugt vor dem Lösen der drehfesten Verbindung des Generatorrotors mit der Ausgangswelle.

In bevorzugten Weiterbildungen jeweils eines der beiden erfindungsgemäßen Verfahren wird der Generatorrotor axial verschoben. Im Einzelnen wird er axial von der Ausgangswelle weg verschoben, wenn er von der Betriebsposition aus in die Wartungsposition gebracht werden soll. Dies geschieht, nachdem die drehfeste Verbindung des Generatorrotors mit der Ausgangswelle gelöst wurde.

Soll der Generatorrotor umgekehrt von der Wartungsposition in die Betriebsposition gebracht werden, wird er axial in Richtung der Ausgangswelle verschoben. Dies geschieht, bevor der Generatorrotor drehfest mit der Ausgangswelle verbunden wird.

Bevorzugte Ausführungsbeispiele der Erfindung sind in den Figuren dargestellt. Übereinstimmende Bezugsziffern kennzeichnen dabei gleiche oder funktionsgleiche Merkmale.

Im Einzelnen zeigt:
- Fig. 1: eine Lageranordnung für einen integrierten Generatorrotor;
- Fig. 2: ein Montagelager; und
- Fig. 3: ein Montagelager mit Passverzahnung.

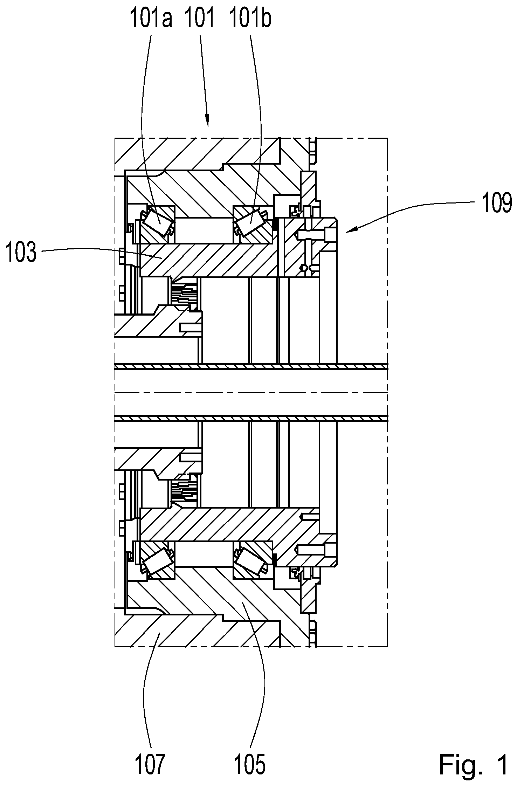

Die in Fig. 1 dargestellte Lageranordnung 101 umfasst zwei Kegelrollenlager 101a, 101b in O-Anordnung. Mittels der Lageranordnung 101 ist eine Ausgangswelle 103 eines Windkraftgetriebes drehbar in einem Gehäuseeinsatz 105 gelagert.

Der Gehäuseeinsatz 105 ist mit der Wandung eines Getriebegehäuses 107 verschraubt. Durch Lösen dieser Verschraubung lässt sich der Gehäuseeinsatz 105 zusammen mit der Lageranordnung 101 und der Ausgangswelle 103 zu Wartungszwecken entnehmen.

Die Ausgangswelle 103 bildet einen Schraubflansch 109 zur Aufnahme eines Generatorrotors aus. Um den Gehäuseeinsatz 105 mit der Lageranordnung 101 und der Ausgangswelle 103 entnehmen zu können, muss der Generatorrotor in eine Wartungsposition gebracht werden. Dazu ist es erforderlich, den Generatorrotor geeignet zu verdrehen.

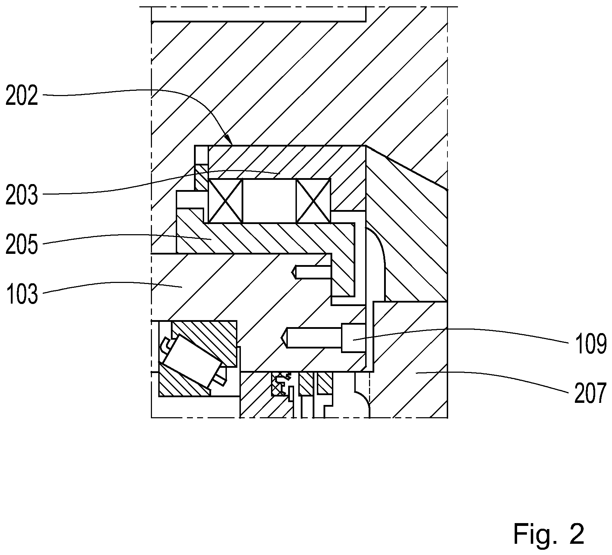

Um den Generatorrotor unabhängig von der Ausgangswelle 103 verdrehen zu können, ist ein in Fig. 2 dargestelltes Montagelager 201 vorgesehen. Das Montagelager 201 weist einen Innenring 203 und einen Außenring 205 auf. Der Außenring 205 ist mit der als Hohlwelle ausgestalteten Ausgangswelle 103 gefügt, der Innenring 205 mit dem in Fig. 2 dargestellten Generatorrotor 207.

Indem die Verschraubung zwischen dem Generatorrotor 207 und der Ausgangswelle 103 gelöst wird, lässt sich der Generatorrotor 207 relativ zu der Ausgangswelle 103 verdrehen. Dabei stützt sich der Generatorrotor 207 über das Montagelager 201 in der Ausgangswelle 103 ab.

Der Innenring 203 und der Außenring 205 sind relativ zueinander axial verschiebbar. Infolgedessen ist auch der Generatorrotor 205 relativ zu der Ausgangswelle 103 axial verschiebbar. Dadurch ist der Generatorrotor 207 im Montagefall frei verdrehbar.

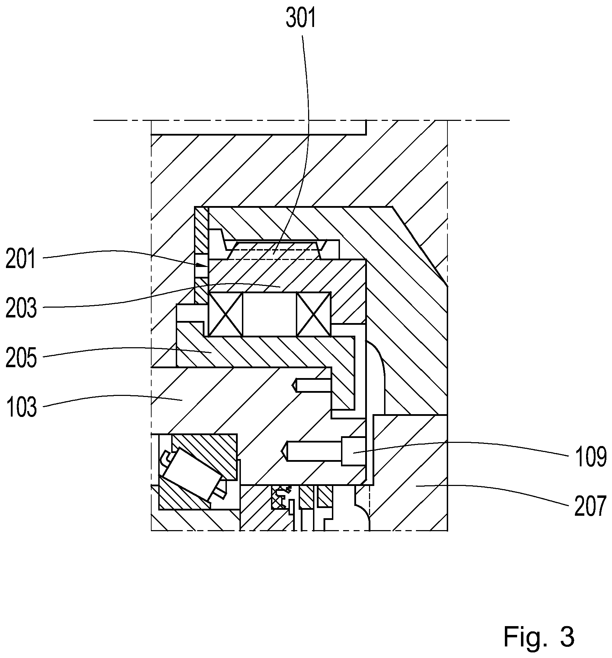

In Fig. 3 zeigt eine Passverzahnung 301. Die Passverzahnung 301 verbindet den Innenring 203 der Lageranordnung 201 mit dem Generatorrotor 207. Dadurch lässt sich der Generatorrotor 207 in der Passverzahnung 301 relativ zu dem Innenring 203 axial verschieben.

### Bezugszeichen

- 101: Lageranordnung
- 101a: Kegelrollenlager
- 101b: Kegelrollenlager
- 103: Ausgangswelle
- 105: Gehäuseeinsatz
- 107: Getriebegehäuse
- 109: Schraubflansch
- 201: Montagelager
- 203: Innenring
- 205: Außenring
- 207: Generatorrotor
- 301: Passverzahnung

## Patentansprüche

1. Anordnung mit einem Getriebe und einem Generator; wobei
ein Generatorrotor (207) drehfest mit einer Ausgangswelle (103) des Getriebes verbunden oder verbindbar ist; wobei
ein Montagelager (201), mit dem der Generator (207) in der Ausgangswelle (103) gelagert ist; **dadurch gekennzeichnet, dass**
das Montagelager (201) einen ersten Laufring (205) und einen zweiten Laufring (203) aufweist, die relativ zueinander verdrehbar sind und sich gegeneinander abstützen;
wobei,
der erste Laufring (205) und der zweite Laufring (203) jeweils mindestens eine Lauffläche ausbilden; wobei
zwischen der Lauffläche des ersten Laufrings (205) und der Lauffläche des zweiten Laufrings (203) ein Lagerspalt verläuft; und wobei
der erste Laufring (205) mit der Ausgangswelle (103) und der zweite Laufring (203) mit dem Generatorrotor (207) gefügt ist.

2. Anordnung nach Anspruch 1; **dadurch gekennzeichnet, dass**
der Generatorrotor (207) lösbar mit der Ausgangswelle (103) verbunden ist.

3. Anordnung nach dem vorhergehenden Anspruch; **dadurch gekennzeichnet, dass** die Ausgangswelle (103) einen ersten Schraubflansch (109) und der Generatorrotor (207) einen zweiten, mit dem ersten Schraubflansch (109) verschraubten Schraubflansch aufweist.

4. Anordnung nach einem der vorhergehenden Ansprüche; **dadurch gekennzeichnet, dass**
der Generatorrotor (207) axial verschiebbar in der Ausgangswelle (103) gelagert ist.

5. Anordnung nach dem vorhergehenden Anspruch; **dadurch gekennzeichnet, dass** mindestens zwei korrespondierende Laufringe des Montagelager (201) axial gegeneinander verschiebbar sind.

6. Anordnung nach dem vorhergehenden Anspruch; **gekennzeichnet, durch**
eine Passverzahnung (301); wobei
mindestens ein Laufring des Montagelagers (201) über die Passverzahnung (301) mit dem Generatorrotor (207) oder der Ausgangswelle (103) verbunden ist.

7. Anordnung nach einem der vorhergehenden Ansprüche; **dadurch gekennzeichnet, dass**
die Ausgangswelle (103) und/oder mindestens ein Lager (101) der Ausgangswelle (103) die Gewichtskraft des Generatorrotors (207) mindestens teilweise abstützt.

8. Anordnung nach einem der vorhergehenden Ansprüche; **gekennzeichnet durch** eine Montagesicherung für den Generatorrotor (207); wobei
der Generatorrotor (207) mittels der Montagesicherung gehäusefest fixierbar ist.

9. Anordnung nach einem der vorhergehenden Ansprüche; **gekennzeichnet durch** einen Windrotor, der drehfest mit einer Eingangswelle des Getriebes verbunden ist.

10. Anordnung nach dem vorhergehenden Anspruch; **gekennzeichnet durch** eine Montagesicherung für den Windrotor; wobei
der Windrotor mittels der Montagesicherung gehäusefest fixierbar ist.

11. Verfahren zur Montage einer Anordnung nach einem der Ansprüche 8 bis 10; mit den Schritten
- lösen der Montagesicherung des Generatorrotors (207),
- drehen des Generatorrotors (207) relativ zu der Ausgangswelle (103), und
- verbinden des Generatorrotors (207) drehfest mit der Ausgangswelle (103).

12. Verfahren nach dem vorhergehenden Anspruch; mit dem Schritt
- ausbauen des Montagelagers (201).

13. Verfahren zur Demontage einer Anordnung nach einem der Ansprüche 8 bis 10; mit den Schritten
- lösen der drehfesten Verbindung des Generatorrotors (207) mit der Ausgangswelle (103);
- drehen des Generatorrotors (207) relativ zu der Ausgangswelle (103), und
- fixieren des Generatorrotors (207) mittels der Montagesicherung gehäusefest.

14. Verfahren nach dem vorhergehenden Anspruch; mit dem Schritt
- einbauen des Montagelagers (201).

15. Verfahren nach einem der vorhergehenden zwei Ansprüche zur Demontage einer Anordnung nach Anspruch 4; mit dem Schritt
- verschieben des Generatorrotors (207) axial.

## Claims

1. Arrangement having a transmission and a generator; wherein
a generator rotor (207) is connected or connectable for conjoint rotation to an output shaft (103) of the transmission; wherein
a mounting bearing (201), with which the generator (207) is mounted in the output shaft (103); **characterized in that**
the mounting bearing (201) has a first raceway (205) and a second raceway (203), which are rotatable relative to one another and are supported against one another; wherein
the first raceway (205) and the second raceway (203) each form at least one running surface; wherein
a bearing gap runs between the running surface of the first raceway (205) and the running surface of the second raceway (203); and wherein
the first raceway (205) is joined to the output shaft (103) and the second raceway (203) is joined to the generator rotor (207).

2. Arrangement according to Claim 1; **characterized in that**
the generator rotor (207) is connected releasably to the output shaft (103).

3. Arrangement according to the preceding claim; **characterized in that**
the output shaft (103) has a first screw flange (109) and the generator rotor (207) has a second screw flange screwed to the first screw flange (109).

4. Arrangement according to one of the preceding claims; **characterized in that**
the generator rotor (207) is mounted axially displaceably in the output shaft (103).

5. Arrangement according to the preceding claim; **characterized in that**
at least two corresponding raceways of the mounting bearing (201) are axially displaceable with respect to one another.

6. Arrangement according to the preceding claim; **characterized by**
a spline toothing (301); wherein
at least one raceway of the mounting bearing (201) is connected to the generator rotor (207) or to the output shaft (103) via the spline toothing (301).

7. Arrangement according to one of the preceding claims; **characterized in that**
the output shaft (103) and/or at least one bearing (101) of the output shaft (103) at least partially supports the weight force of the generator rotor (207).

8. Arrangement according to one of the preceding claims; **characterized by**
a mounting securing means for the generator rotor (207); wherein
the generator rotor (207) is fixable with respect to the housing by means of the mounting securing means.

9. Arrangement according to one of the preceding claims; **characterized by**
a wind rotor, which is connected for conjoint rotation to an input shaft of the transmission.

10. Arrangement according to the preceding claim; **characterized by**
a mounting securing means for the wind rotor; wherein
the wind rotor is fixable with respect to the housing by means of the mounting securing means.

11. Method for mounting an arrangement according to one of Claims 8 to 10; comprising the steps of
- releasing the mounting securing means of the generator rotor (207),
- rotating the generator rotor (207) relative to the output shaft (103), and
- connecting the generator rotor (207) for conjoint rotation to the output shaft (103).

12. Method according to the preceding claim; comprising the step of
- removing the mounting bearing (201).

13. Method for dismounting an arrangement according to one of Claims 8 to 10; comprising the steps of
- releasing the rotationally conjoint connection of the generator rotor (207) to the output shaft (103);
- rotating the generator rotor (207) relative to the output shaft (103), and
- fixing the generator rotor (207) with respect to the housing by means of the mounting securing means.

14. Method according to the preceding claim; comprising the step of
- installing the mounting bearing (201).

15. Method according to either of the preceding two claims for dismounting an arrangement according to Claim 4; comprising the step of
- displacing the generator rotor (207) axially.

## Revendications

1. Arrangement comprenant une transmission et un générateur ;
un rotor de générateur (207) étant relié ou pouvant être relié en rotation solidaire à un arbre de sortie (103) de la transmission ;
un palier de montage (201) avec lequel le générateur (207) est monté dans l'arbre de sortie (103) ; **caractérisé en ce que**
le palier de montage (201) possède une première bague de roulement (205) et une deuxième bague de roulement (203) qui peuvent tourner l'une par rapport à l'autre et qui s'appuient l'une contre l'autre ;
la première bague de roulement (205) et la deuxième bague de roulement (203) formant respectivement au moins une surface de roulement ;
un espace de palier s'étendant entre la surface de roulement de la première bague de roulement (205) et la surface de roulement de la deuxième bague de roulement (203) ; et
la première bague de roulement (205) étant assemblée avec l'arbre de sortie (103) et la deuxième bague de roulement (203) avec le rotor de générateur (207).

2. Arrangement selon la revendication 1 ; **caractérisé en ce que**
le rotor de générateur (207) est relié de manière amovible à l'arbre de sortie (103).

3. Arrangement selon la revendication précédente ; **caractérisé en ce que**
l'arbre de sortie (103) possède une première bride à visser (109) et le rotor de générateur (207) une deuxième bride à visser, vissée à la première bride à visser (109).

4. Arrangement selon l'une des revendications précédentes ; **caractérisé en ce que**
le rotor de générateur (207) est monté de manière à pouvoir coulisser axialement dans l'arbre de sortie (103) .

5. Arrangement selon la revendication précédente ; **caractérisé en ce que**
au moins deux bagues de roulement correspondantes du palier de montage (201) peuvent coulisser axialement l'une par rapport à l'autre.

6. Arrangement selon la revendication précédente ; **caractérisé par**
une denture d'ajustement (301) ;
au moins une bague de roulement du palier de montage (201) étant reliée au rotor de générateur (207) ou à l'arbre de sortie (103) par l'intermédiaire de la denture d'ajustement (301).

7. Arrangement selon l'une des revendications précédentes ; **caractérisé en ce que**
l'arbre de sortie (103) et/ou au moins un palier (101) de l'arbre de sortie (103) supporte au moins partiellement le poids du rotor de générateur (207).

8. Arrangement selon l'une des revendications précédentes ; **caractérisé par**
un moyen de fixation de montage pour le rotor de générateur (207) ;
le rotor de générateur (207) pouvant être calé en position fixe sur le boîtier à l'aide du moyen de fixation de montage.

9. Arrangement selon l'une des revendications précédentes ; **caractérisé par**
un rotor éolien qui est relié en rotation solidaire à un arbre d'entrée de la transmission.

10. Arrangement selon la revendication précédente ; **caractérisé par**
un moyen de fixation de montage pour le rotor éolien ;
le rotor éolien pouvant être calé en position fixe sur le boîtier à l'aide du moyen de fixation de montage.

11. Procédé de montage d'un arrangement selon l'une des revendications 8 à 10, comprenant les étapes suivantes :
- libération du moyen de fixation de montage du rotor de générateur (207),
- rotation du rotor de générateur (207) par rapport à l'arbre de sortie (103) et
- liaison en rotation solidaire du rotor de générateur (207) avec l'arbre de sortie (103).

12. Procédé selon la revendication précédente ; comprenant l'étape suivante :
- dépose du palier de montage (201).

13. Procédé de démontage d'un arrangement selon l'une des revendications 8 à 10, comprenant les étapes suivantes :
- libération de la liaison en rotation solidaire du rotor de générateur (207) avec l'arbre de sortie (103) ;
- rotation du rotor de générateur (207) par rapport à l'arbre de sortie (103) et
- calage du rotor de générateur (207) en position fixe sur le boîtier à l'aide du moyen de fixation de montage.

14. Procédé selon la revendication précédente ; comprenant l'étape suivante :
- pose du palier de montage (201).

15. Procédé selon l'une des deux revendications précédentes pour le démontage d'un arrangement selon la revendication 4 ; comprenant l'étape suivante :
- coulissement axial du rotor de générateur (207).
